# EUROPÄISCHE PATENTSCHRIFT

(11) **EP 1 503 133 B1**
(45) Veröffentlichungstag und Bekanntmachung des Hinweises auf die Patenterteilung: **04.06.2014**
(21) Anmeldenummer: 04016330.5
(22) Anmeldetag: 12.07.2004
(51) Int. Cl.: F16L 59/07

(54) **Wärmegedämmtes Bauteil**
Heat-insulated member
Element isolé thermiquement

(30) Priorität: 29.07.2003 DE 20311697 U
(43) Veröffentlichungstag der Anmeldung: 02.02.2005
(73) Patentinhaber: ISOLITE GmbH, 67063 Ludwigshafen (DE)
(72) Erfinder: Bühler, Arno., 68800 Altlussheim (DE); Bechtel, Peter., 69120 Heidelberg (DE)
(74) Vertreter: Grünecker, Kinkeldey, Stockmair & Schwanhäusser

(56) Entgegenhaltungen:
- EP-A- 0 582 985
- DE-A1- 3 238 330
- DE-A1- 4 414 738
- DE-A1- 10 127 200
- DE-A1- 19 813 590
- US-A- 4 022 019
- US-A- 5 424 139
- US-A- 5 524 406
- US-A- 5 974 784

## Beschreibung

Die Erfindung bezieht sich auf ein wärmegedämmtes, abgasführendes Bauteil für zwischen einem Verbrennungsmotor und einem eine bestimmte Betriebstemperatur erfordernden Nachschaltaggregat.

Die DE 32 38 330 zeigt einen Abgassammler für Brennkraftmaschinen, bei dem die aus dem Motor herausführenden Rohrabschnitte mit einer Wärmedämmkapsel versehen sind, die aus zwei mit einem dazwischenliegenden Luftspalt zusammengesetzten Halbschalen besteht. Die Kapsel ist jedoch ihrerseits unter Freihaltung eines Luftspaltes an den Rohrabschnitten befestigt. Durch die Ausbildung als Kapsel und Rohrabschnitt hat jedoch die innenliegende Halbschale eine relativ hohe Wandstärke, was sich nachteilig auf das Gewicht auswirkt. Eine Kompensationseinrichtung für Wärmedehnungen ist nicht vorgesehen.

Die DE 44 14 738 beschreibt eine Abgasanlage mit einem Luftspaltrohr mit einem Außen- und einem Innenrohr. Das Außenrohr ist mit Hilfe eines Abkoppelelementes an einem zum Katalysator führenden Rohr befestigt, wobei das Abkoppelelement Wellungen aufweist, durch die verhindert werden soll, dass Schwingungen vom Luftspaltrohr auf das Katalysatorrohr übertragen werden. Das Innenrohr führt in das Katalysatorrohr hinein und endet dort. Über den Wellungen ist ein Tragrohr angeordnet.

Die US 4 022 019, vgl. Oberbegriff des Anspruchs 1 der vorliegenden Erfindung, beschreibt ein Abgassystem für Verbrennungsmotoren, wobei ein oder mehrere gewellte rohrförmige Teile über oder innerhalb eines glatten rohrförmigen Teils angeordnet sind, um Wärmedehnungen aufzunehmen. Die Wellungen stehen jedoch mit der anliegenden Oberfläche des glatten rohrförmigen Teiles in Verbindung, so dass sich kein durchgehender Luftspalt ergibt.

Die US 5 424 139 beschreibt ein Isolationsbauteil mit mindestens zwei dünnen Metallblechen, die durch Abstandshalter zueinander in Abstand gehalten sind. Die Bleche können Folienstärke ab 12,7 µm bis Blechstärke im höheren Bereich von 0,762 mm aufweisen. Der Abstand zwischen schen den Blechen enthält Luft, wird jedoch durch einen unterstützenden Körper ausgefüllt, der aus einer Art Streckmetallfolie besteht.

Die EP 0 582 985 beschreibt einen Abgaskrümmer, der mit Innen- und Außenschale sowie einem dazwischen liegenden Luftspalt ausgebildet ist, wobei die Innen- und Außenschale im Bereich eines Befestigungsflansches miteinander verbunden sind.

Die DE 198 13 590 beschreibt ein Abgasbauteil für Brennkraftmaschinen mit einem doppelwandigen Gehäuse, wobei der Luftraum zwischen dem inneren und äußeren Mantel gasdicht abgeschlossen und mit einem Inertgas gefüllt ist.

Die DE 101 27 200 beschreibt die auch in der vorliegenden Anmeldung verwendete Kompensationseinrichtung in Form eines gewellten Rohrstückes zum Ausgleich von Wärmedehnungen.

Die US 5 974 784 A beschreibt ein mehrschichtiges Wärmeisolationsgewebe, bei dem eine Außenhaut und eine Innenhaut durch ein Graphitfasergeflecht auf Abstand zueinander gehalten werden. Die Innenhaut und Außenhaut sind auf den einander zugewandten Seiten mit Titan beschichtet. Das Gewebe wird mit Kunstharz getränkt und auf der Außenseite Abgas führender Bauteile auflaminiert.

Abgasführende Bauteile für Verbrennungsmotoren, bei denen Katalysatoren oder Rußfilter oder ähnliche Nachschaltaggregate vorgesehen sind, die erst bei einer bestimmten Betriebstemperatur ihre optimale Wirksamkeit entfalten, wurden bislang entweder durch einen Faserkorpus oder durch einen einfachen Luftspalt wärmegedämmt. Die Dämmung durch einen einfachen Luftspalt hat sich als nicht befriedigend erwiesen, da man den Einfluss der Strahlungswärme, der mit Erhöhung der Temperatur stark zunimmt, unterschätzt und demzufolge vernachlässigt hat. Dies führt dazu, dass die Oberflächentemperatur bzw. der Wärmeübergang nicht in dem gewünschten Maße eintritt und zu viel Energie verloren geht, was sich insbesondere im laufenden Betrieb nachteilig auf den Betrieb der Nachschaltaggregate auswirken kann.

Die Dämmung durch Dämmstofffasern ist einerseits aufwendig und birgt andererseits die Gefahr, dass die Fasern ausgeblasen werden. Zwar ist die Wärmedämmwirkung eines herkömmlichen Faserkorpus zufriedenstellend, durch die höhere Wärmekapazität des Faserkorpus wird jedoch in der Anlaufphase die Betriebstemperatur in den Nachschaltaggregaten zu spät erreicht.

Der Erfindung liegt somit die Aufgabe zugrunde, ein wärmegedämmtes Bauteil bereitzustellen, das in der Lage ist, den Temperaturverlauf zum Erreichen und Halten einer bestimmten Betriebstemperatur zu verbessern.

Die Aufgabe wird durch die im Anspruch 1 angegebenen Merkmale gelöst.

Durch die erfindungsgemäße Ausgestaltung wird ein wärmegedämmtes Bauteil geschaffen, das einerseits eine niedrige Wärmekapazität aufweist, d.h. wenig Energie für seine eigene Erwärmung benötigt, und das andererseits jedoch eine sehr gute Wärmedämmung bietet, so dass die Betriebstemperatur auch in engen Grenzen aufrechterhalten werden kann. Das erfindungsgemäße Bauteil erreicht gegenüber mit Faserdämmkörpem versehenen Bauteilen, beispielsweise in Form von Auslasskrümmem, schneller die Betriebstemperatur, was der Anwendung im Motorbau zugute kommt, da insbesondere Automobile im wechselnden Teillastbereich, also vorwiegend instationär, betrieben werden, was letztlich aus zu einem höheren Wirkungsgrad führt. Durch die Tatsache, dass das erfindungsgemäße Bauteil schneller die Betriebstemperatur erreicht, kann der Wirkungsgrad und das Anspringverhalten des Katalysators bzw. anderer Nachschaltaggregate gegenüber dem einfachen Luftspaltkrümmer verbessert werden.

Zwar ist es bekannt, Bauteile mit mehreren, voneinander getrennten Luftschichten zu dämmen, beispielsweise aus der EP 33 487 A1, der EP 36 165 A1, der DE 38 25 520 A1 oder der DE-OS 25 21 163, dort wurde diese Art der Wärmedämmung jedoch nur für Bauteile eingesetzt, bei denen es allein um die Verhinderung der Abkühlung im laufenden Betrieb geht, oder bei denen die Möglichkeit geschaffen werden soll, beispielsweise für Kernkraftanlagen, die wärmegedämmten Bauteile samt Wärmedämmung gegebenenfalls fluten zu können.

Die erfindungsgemäße Ausgestaltung hat jedoch noch weitere Vorteile. So werden beispielsweise Abgase führende Bauteile wie Abgaskrümmer, Abgasrohre oder Abgasteilsysteme geschaffen, die eine vernachlässigbare Wärmekapazität aufweisen, die geringst mögliche Oberflächentemperaturen im Betriebszustand am Bauteiläußeren aufweisen, deren Gewicht erheblich reduziert ist, die schnellst möglicht ein Erreichen der "erforderlichen" Betriebstemperatur gewährleisten und nicht zuletzt eine verringerte Körperschallübertragung aufweisen.

Ein weiterer Vorteil dieser Erfindung besteht darin, dass im Gegensatz zu vergleichbaren Bauteilen mit einem eingebrachten Dämmkorpus bei diesem erfindungsgemäßen Bauteil die Gefahr des Ausblasens des Dämmkorpus nicht gegeben ist.

Bei diesem erfindungsgemäßen Bauteil wird die Tatsache genutzt, dass der Effekt der Strahlungsreflexion der Edelstahlfolien bei höheren Temperaturen immer stärker dominiert, während der Konvektionsanteil wegen der mit steigender Temperatur zäher fließenden Luft immer geringer wird.

Die Eigenschaften dieses erfindungsgemäßen Bauteils tragen entscheidend dazu bei, das Fahrzeuggewicht, die Motorraumtemperatur, den Kühlaufwand, die Wärmekapazität, die Schadstoffemissionen sowie den Kraftstoffverbrauch zu reduzieren. Gleichzeitig wird die Energiezuführung für die Nachschaltaggregate wie Katalysator, Rußfilter etc. erheblich verbessert und trägt somit entscheidend zur Steigerung des Gesamtwirkungsgrades bei.

Vorteilhafte Weiterbildungen der Erfindung sind den Unteransprüchen zu entnehmen.

Die Wärmekapazität des Bauteils wird durch eine oder durch mehrere Maßnahmen nach den Ansprüchen 2 bis 4 weiter verbessert. Weiterhin wird dadurch auch das Gewicht des Bauteils reduziert.

Erfindungsgemäß wird der Anteil der Strahlungswärme, die nach außen abgegeben wird, verringert. Durch Verwendung einer Folie aus hochwarmfesten Edelstahl ist die Oberflächenrauigkeit der Trennschicht mit hohem Glanzgrad so gering wie möglich, und es wird ein höchstes Maß an Minderung der Wärmestrahlung vom heißgasführenden Bereich nach außen erreicht.

Mit dem erfindungsgemäßen Bauteil ist es möglich, die vorbestimmte Dicke der Luftschichten aufrechtzuerhalten.

Durch die Ausgestaltung nach Anspruch 5 wird die Montage des Bauteils weiter erleichtert.

Die Ansprüche 7 und 8 beschreiben bevorzugte konstruktive Ausgestaltungen zum Ausgleich der unvermeidlichen Wärmedehnungen. Insbesondere die mit den heißen Medien unmittelbar in Kontakt stehende Innenhaut kann je nach Anforderung zur Kompensation der Wärmeausdehnungen gasdicht mit elastischen Wellungen oder mit Schiebsitzen (z.B. Labyrinthschiebesitze) gestaltet sein.

Ausführungsbeispiele der Erfindung werden nachfolgend anhand der Zeichnungen näher erläutert. Es zeigen:
- Fig. 1: einen Längsschnitt durch ein erstes Ausführungsbeispiel der vorliegenden Erfindung,
- Fig. 2: einen Längsschnitt durch ein zweites Ausführungsbeispiel der Erfindung,
- Fig. 3: einen Längsschnitt durch ein drittes Ausführungsbeispiel der Erfindung,
- Fig. 4: einen Querschnitt durch ein weiteres Ausführungsbeispiel der Erfindung, und
- Fig. 5: einen Querschnitt durch ein weiteres Ausführungsbeispiel nicht nach der Erfindung.

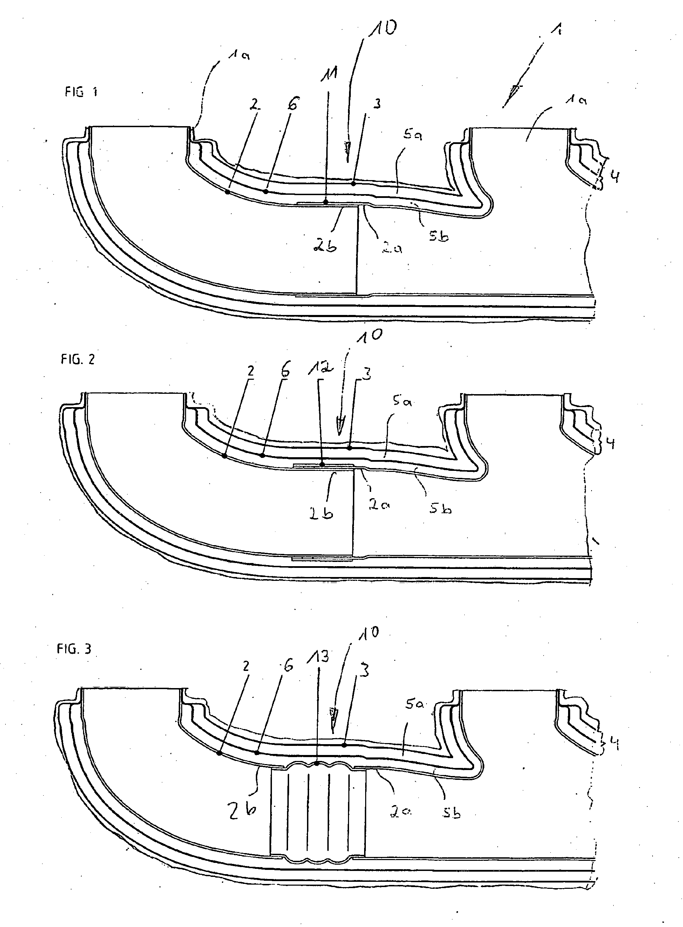

In den Fig. 1 bis 5 ist ein erfindungsgemäßes Bauteil 1 dargestellt, das als Teil einer heißgasführenden Leitung, insbesondere als Abgaskrümmer eines Verbrennungsmotors ausgebildet ist, und weist die an diesen Verwendungszweck angepasste, übliche Form, beispielsweise mit Anschlussstutzen 1a, und Abmessung auf.

Das Bauteil 1 besteht im dargestellten Ausführungsbeispiel aus einer direkt mit dem Abgas in Kontakt stehende Innenhaut 2 und einer im Abstand dazu angeordneten Außenhaut 3, zwischen denen eine Wärmedämmung angeordnet ist. Die Wärmedämmung 4 besteht aus mehreren Luftschichten, dargestellt sind zwei Luftschichten 5a und 5b, die durch eine Trennschicht 6 voneinander getrennt sind. Im Bereich der Anschlussstutzen 1 a laufen Außenhaut 3, Trennschicht 6 und Innenhaut 2 unter Eliminierung der Luftschichten 5a, 5b zusammen.

Die eine oder die Vielzahl von Trennschichten 6 können je nach Bauraumverhältnissen im konkreten Anwendungsfall, in variierenden Abständen untereinander und zur Innen- bzw. Außenhaut platziert werden.

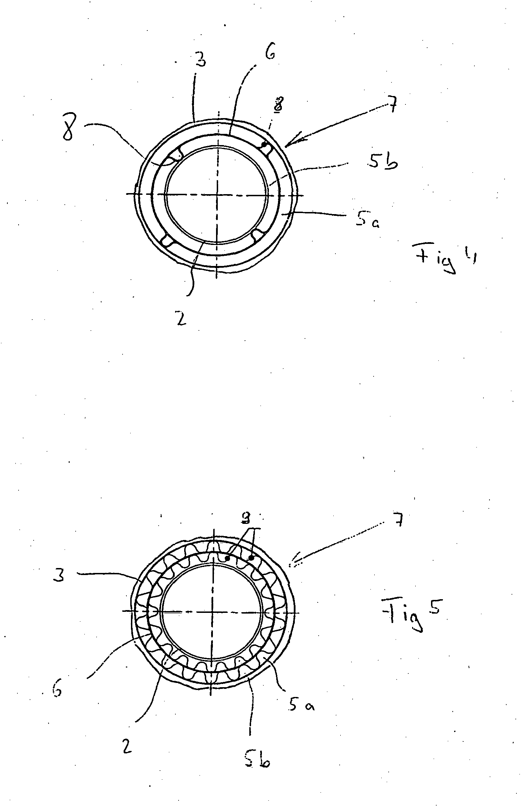

Die Trennschicht 6 ist durch eine Abstandseinrichtung 7, bevorzugt im möglichst gleichbleibenden Abstand, zur Innenhaut 2 und zur Außenhaut 3, z.B. jeweils 3 mm, gehalten. Diese Abstandseinrichtung 7 ist, wie in den Fig. 4 und 5 dargestellt, durch Vorsprünge gebildet, die wie Fig. 4 zeigt, in Form von Kalotten 8 in die Trennschicht 6 eingeprägt werden kann. Die Kalotten 8 können entweder nur bereichsweise oder über die gesamten Oberflächen der Trennschicht 6 vorgesehen werden und stehen von beiden Oberflächen der Trennschicht 6 vor, so dass der Abstand sowohl zur Innenhaut 2 als auch zur Außenhaut 3 festgelegt wird.

Zum Ausgleich der unvermeidlichen Wärmedehnungen ist weiterhin eine Kompensationseinrichtung 10 vorgesehen, die in den Fig. 1 bis 3 näher dargestellt ist. Die Kompensationseinrichtung 10 kann als einfacher Schiebesitz 11, wie er in Fig. 1 dargestellt ist, ausgebildet sein, wobei im vorliegenden Ausführungsbeispiel die Innenschale 2 geteilt ist und einer der Endbereiche 2a der Innenschale 2 aufgeweitet wurde, so dass er in gleitendem Schiebesitz über den anderen Endbereich 2b der Innenschale 2 über einen ausreichend großen, axialen Bereich geschoben werden kann, so dass Wärmedehnungen ausgeglichen werden können, ohne dass sich die Teile 2a, 2b trennen.

In der Ausführungsform gemäß Fig. 2 wird die Kompensationseinrichtung 10 durch einen labyrinthischen Schiebesitz 12 gebildet, was zu einer stärker gasdichtenden Verbindung führt. Beim labyrinthischen Schiebesitz 12 sind die beiden gegeneinander verschiebbaren Teile 2a, 2b der Innenschale 2 gefaltet überlappt.

Fig. 3 zeigt ein drittes Ausführungsbeispiel einer Kompensationseinrichtung 10, die hier aus einem Zwischenstück 13 besteht, das mit den beiden auf Abstand gehaltenen Enden 2a, 2b der Innenschale verbunden ist und diesen Abstand überbrückt. Das Zwischenstück 13 ist mit eingeprägten, sich in Umfangsrichtung erstreckenden Wellungen oder Faltungen versehen, die sich bei einer axialen Bewegung der Innenschale 2 aufwölben oder strecken können, um auf diese Weise Wärmedehnungen auszugleichen.

In einem Abgaskrümmer treten sehr hohe Temperaturdifferenzen zwischen Umgebungstemperatur und Abgastemperatur auf. Die thermischen Änderungen des Abgaskrümmers erzeugen hohe Ausdehnungen des abgasführenden Elementes. In einem erfindungsgemäßen Bauteil ergibt sich ein Abgaskrümmer, der die stark variierenden Temperaturen und die sich dadurch ergebenden großen thermischen Ausdehnungen problemlos in den elastischen Wellungen aufnehmen kann. Diese Wellungen in den Wandungen können als Formstücke gefertigt werden, die anschließend durch z.B. Innenhochdruckumformverfahren umgeformt werden.

Das erfindungsgemäße Bauteil 1 mit seiner Innenhaut 2, seiner Außenhaut 3 und der Trennschicht 6 besteht aus Metallblech, was relativ dünne Wandstärken und somit eine geringe Wärmekapazität ergibt. Das Material für Innen- und Außenhaut sowie Trennschicht wird gemäß den thermischen bzw. korrosiven Belastungen im Betrieb ausgewählt. Für eine Verwendung im Abgassystem von Verbrennungsmaschinen, insbesondere Auspuffkrümmem, mit einer thermischen Belastung der Innenhaut, die je nach Motorleistung im Bereich zwischen 600°C und 1000°C liegt, ist für die Innenhaut und die Teile der Kompensationseinrichtung ein hochwarmfester austenitischer und/oder ferritischer Stahl mit geringen Ausdehnungskoeffizienten in einer Materialstärke zwischen 0,4 bis 1,5, insbesondere 0,4 bis 1,2 mm, bevorzugt. Die Trennschicht 6 besteht aus einer Metallfolie aus einem dieser hochwarmfestem Edelstähle und liegt in ihrer Materialstärke bei 25 µm bis 150 µm. Auch die Außenhaut 3 kann aus einem dieser hochwarmfesten Edelstähle gefertigt werden, hier liegt die Materialstärke bevorzugt bei 0,4 bis 2 mm.

Bevorzugte hochwarmfeste Edelstähle sind beispielsweise Inconel® oder Nimonic® oder dgl. Es eignet sich jedoch auch ferritischer Stahl der Werkstoffnummem 1.4713 bis 1.4762.

Die Metallfolie hat eine geringe Oberflächenrauigkeit und einen hohen Glanzgrad, um den Anteil der Strahlungswärme zusätzlich zu verringern. Es sei daran erinnert, dass der Anteil der Strahlungswärme an der Gesamtabgabe der Wärmeenergie bei höheren Temperaturen immer stärker dominiert, während der Konvektionsanteil wegen der mit steigender Temperatur zäher fließenden Luft immer geringer wird. Eine Verringerung des Strahlungsanteils der Wärmeabgabe, beispielsweise durch die beschriebene, geringe O-berflächenrauigkeit, bringt bei höheren Temperaturen demzufolge den größeren Effekt im Hinblick auf eine effektive Wärmedämmung.

Die Innenhaut, die Außenhaut und die Folie der Trennschicht können im Tiefziehverfahren hergestellt werden, wobei bevorzugt gleichzeitig Teile der Abstandseinrichtung 7 bzw. der Kompensationseinrichtung 10 mit angeformt werden.

Zweckmäßigerweise kann bei der Herstellung des erfindungsgemäßen Bauteils zunächst die Innenhaut und die Trennschicht zu einer Einheit verbunden werden, die dann in eine entsprechend ausgestaltete Außenhaut eingesetzt wird.

In Abwandlung der beschriebenen und gezeichneten Ausführungsbeispiele kann das Bauteil mit der erfindungsgemäß ausgebildeten, wenigstens zweischichtigen Luftisolierung an jeden Verwendungszweck angepasst werden. Das Einsatzgebiet des erfindungsgemäßen Bauteils ist weder auf heißgasführende Leitungen noch auf Teile einer Abgasanlage noch auf abgasführende Teile von Verbrennungsmotoren beschränkt, sondern kann überall dort eingesetzt werden, wo ähnliche Probleme bzw. Lasten auftreten. Die zwei Luftschichten des beschriebenen Ausführungsbeispiels stellen das Minimum dar. Je nach Anwendungszweck bzw. gewünschtem Dämmungsgrad sind drei oder noch mehr Luftschichten zu verwenden, die jeweils durch Trennschichten, die bevorzugt folienartig dünn sind, gegeneinander abgegrenzt sind. Die Kompensation der Wärmedehnung kann durch andere, dem Fachmann bekannte Maßnahmen erfolgen.

## Patentansprüche

1. Wärmegedämmtes, Abgas führendes Bauteil zum Einsatz zwischen einem Verbrennungsmotor und einem eine bestimmte Betriebstemperatur erfordernden Nachschaltaggregat, insbesondere Auslasskrümmer, Abgasrohr oder Abgasteilsystem, mit einer Abgas führend ausgebildeten Innenhaut (2) aus Metallblech, einer Außenhaut (3) aus Metallblech und einer Wärmedämmung (4) zwischen Innenhaut und Außenhaut, wobei die Wärmedämmung (4) wenigstens zwei, jeweils durch eine Trennschicht (6) voneinander getrennte, isolierende Luftschichten (5a, 5b) aufweist, und wobei die Trennschicht (6) durch eine Abstandshalteeinrichtung (7) im Abstand zur Innen- und Außenhaut (2, 3) gehalten ist, **dadurch gekennzeichnet, daß** die Trennschicht (6) durch eine Folie aus hochwarmfestem Edelstahl gebildet ist und eine Materialstärke von 25 bis 150 µm aufweist und die Abstandshalteeinrichtung auf beiden Oberflächen der Trennschicht eingeformte Vorsprünge (8) umfasst, um den Abstand zur Innenhaut (2) und zur Außenhaut (3) festzulegen.

2. Bauteil nach Anspruch 1, wobei, dass die Innen- und/oder die Außenhaut (2, 3) aus hochwarmfestem Edelstahl, besteht.

3. Bauteil nach Anspruch 1 oder 2, wobei, dass die Innenhaut (2) eine Materialstärke von 0,4 bis 1,5 mm, bevorzugt 0,4 bis 1,2 mm aufweist.

4. Bauteil nach einem der Ansprüche 1 bis 3, wobei die Außenhaut (3) eine Materialstärke von 0,4 bis 2 mm aufweist.

5. Bauteil nach einem der Ansprüche 1 bis 4, wobei die Innenhaut (2) und die Trennschicht (6) zu einer Einheit verbunden und in der Außenhaut (3) untergebracht ist.

6. Bauteil nach Anspruch 1, wobei in die Innenhaut (2) wenigstens eine Kompensationseinrichtung (10) zum Ausgleich einer Wärmedehnung integriert ist.

7. Bauteil nach Anspruch 6, wobei die Kompensationseinrichtung (10) einen glatt oder einen labyrinthisch ausgebildeten Schiebesitz (11, 12) umfasst.

8. Bauteil nach Anspruch 6, wobei die Kompensationseinrichtung (10) einen gewellten Abschnitt (13) umfasst.

## Claims

1. A thermally insulated component conveying exhaust gas for use between an internal combustion engine and a downstream unit requiring a specified operating temperature, in particular an exhaust manifold, an exhaust pipe or an exhaust gas subsystem, with an inner skin (2) of metal sheet designed to convey exhaust gas, an outer skin (3) of metal sheet and a thermal insulation (4) between the inner skin and the outer skin, wherein the thermal insulation (4) has at least two insulating air layers (5a, 5b) separated from each other by a separation layer (6) in each case, and wherein the separation layer (6) is held at a distance from the inner and outer skins (2, 3) by a spacer device (7), **characterized in that** the separation layer (6) is formed by a foil of high-temperature-resistant high-grade steel and has a thickness of material of from 25 to 150 µm and the spacer device comprises projections (8) formed on both surfaces of the separation layer in order to fix the distance from the inner skin (2) and from the outer skin (3).

2. A component according to Claim 1, wherein
the inner and/or the outer skin (2, 3) consists or consist of high-temperature-resistant high-grade steel.

3. A component according to Claim 1 or 2, wherein
the inner skin (2) has a thickness of material of from 0·4 to 1·5 mm, preferably from 0·4 to 1·2 mm.

4. A component according to any one of Claims 1 to 3, wherein the outer skin (3) has a thickness of material of from 0·4 to 2 mm.

5. A component according to any one of Claims 1 to 4, wherein the inner skin (2) and the separation layer (6) are connected to form a unit and are housed in the outer skin (3).

6. A component according to Claim 1, wherein at least one compensation device (10) for equalizing thermal expansion is incorporated in the inner skin (2).

7. A component according to Claim 6, wherein the compensation device (10) comprises a sliding seat (11, 12) designed so as to be flat or in the manner of a labyrinth.

8. A component according to Claim 6, wherein the compensation device (10) comprises a corrugated portion (13).

## Revendications

1. Pièce de construction mécanique véhiculant des gaz d'échappement et isolée thermiquement, qui est destinée à être mise en oeuvre entre un moteur à combustion interne et un groupe aval nécessitant une température de fonctionnement déterminée, notamment une tubulure d'échappement, un tube de gaz d'échappement ou un sous-système ou séparateur de gaz d'échappement, la pièce de construction mécanique comprenant une enveloppe intérieure (2) en tôle métallique conçue pour véhiculer des gaz d'échappement, une enveloppe extérieure (3) en tôle métallique et une isolation thermique (4) entre l'enveloppe intérieure et l'enveloppe extérieure, l'isolation thermique (4) présentant au moins deux couches d'air (5a, 5b) isolantes, respectivement séparées les unes des autres par une couche de séparation (6), et la couche de séparation (6) étant maintenue à distance de l'enveloppe intérieure et de l'enveloppe extérieure (2, 3) par un dispositif écarteur (7),
**caractérisée en ce que** la couche de séparation (6) est formée par une feuille en acier spécial hautement réfractaire et présente une épaisseur de matière de 25 à 150 µm, et le dispositif écarteur comprend des protubérances (8) obtenues par formage dans les deux faces de la couche de séparation, en vue de fixer la distance à l'enveloppe intérieure (2) et à l'enveloppe extérieure (3) .

2. Pièce de construction mécanique selon la revendication 1, dans laquelle l'enveloppe intérieure et/ou extérieure (2, 3) sont réalisées en acier spécial hautement réfractaire.

3. Pièce de construction mécanique selon la revendication 1 ou la revendication 2, dans laquelle l'enveloppe intérieure (2) présente une épaisseur de matière de 0,4 à 1,5 mm, de préférence de 0,4 à 1,2 mm.

4. Pièce de construction mécanique selon l'une des revendications 1 à 3, dans laquelle l'enveloppe extérieure (3) présente une épaisseur de matière de 0,4 à 2 mm.

5. Pièce de construction mécanique selon l'une des revendications 1 à 4, dans laquelle l'enveloppe intérieure (2) et la couche de séparation (6) sont reliées en une seule unité qui est logée dans l'enveloppe extérieure (3).

6. Pièce de construction mécanique selon la revendication 1, dans laquelle au moins un dispositif de compensation (10) est intégré à l'enveloppe intérieure (2), pour compenser une dilatation thermique.

7. Pièce de construction mécanique selon la revendication 6, dans laquelle le dispositif de compensation (10) comprend un emmanchement coulissant lisse ou d'une configuration en forme de labyrinthe (11, 12) .

8. Pièce de construction mécanique selon la revendication 6, dans laquelle le dispositif de compensation (10) comprend un tronçon ondulé (13).
